# EUROPEAN PATENT APPLICATION

(11) **EP 2 065 957 A1**
(43) Date of publication of application: **03.06.2009**
(21) Application number: 07791650.0
(22) Date of filing: 31.07.2007
(51) Int. Cl.: H01M 8/02, H01M 8/10

(54) **PROCESS FOR PRODUCING SEPARATOR FOR FUEL CELL AND SEPARATOR FOR FUEL CELL**

(30) Priority: 31.07.2006 JP 2006209028; 17.05.2007 JP 2007131629
(71) Applicant: SEIKOH GIKEN CO., LTD., Matsudo-shi, Chiba 270-2214 (JP)
(72) Inventor: TAKAHASHI, Shigenobu c/o Seikoh Giken Co,Ltd, Matsudo-shi,Chiba 2702214 (JP); SUZUKI, Masami c/o Seikoh Giken Co, Ltd, Matsudo-shi Chiba 2702214 (JP); YAMAZAKI, Yujiro c/o Seikoh Giken Co,Ltd, Matsudo-shi Chiba 2702214 (JP)
(74) Representative: Manitz, Finsterwald & Partner GbR
(86) International application number: PCT/JP2007/064965
(87) International publication number: WO 2008/016041

(57) **Abstract**

A step of molding a raw-material powder comprising a carbon powder and a thermosetting resin by hot compacting and a step of heat-curing the thermosetting resin are conducted in combination to thereby produce, without lowering a production rate, a fuel-cell separator inhibited from suffering the decrease in performance caused by the curing expansion of a resin. The process for fuel-cell separator production comprises: a compacting step in which a mixture of a carbon powder and a thermosetting resin as a raw-material powder is packed into a mold cavity and compacted into a separator-shaped plate at a required pressing force while heating it at a required temperature not lower than the heat curing initiation temperature of the thermosetting resin; and a heat-curing step in which the molded plate obtained through compaction in the compacting step is heated, in a non-pressed state, at a required temperature not lower than the heat curing initiation temperature of the thermosetting resin to thereby cure the resin.

## Description

### Technical Field

The present invention generally relates to a method for manufacturing a bipolar plate used in a Polymer Electrolyte Fuel Cell (PEFC) and the bipolar plate for the fuel cell.

### Background of Art

A bipolar plate for a fuel cell has been known as one of main components of the fuel cell in the prior art. This bipolar plate is configured by providing a plurality of grooves on both sides thereof. For the method for manufacturing the bipolar plate, two processes, one having a step of cold pressing and one having a step of hot pressing have been well known.

The former of these two processes can be schematically explained that the process comprises the steps of filling a molding die at a normal temperature in a press machine with thermosetting resin coated graphite powders that are comprised by coating graphite powders with a thermosetting resin (hereinafter, just referred as "material for a fuel cell bipolar plate"); applying compressing pressure ranging from 15 to 100 MPa to the molding die at a temperature of the softening or melting point of the thermosetting resin or below (cold press); molding the material into a predetermined shape; and heating the molded material without applying any pressure thereto, thereby curing the resin (see, for example, Patent Literature 1).

On the other hand, the latter of these two processes can be schematically explained that the process comprises the steps of mixing carbon powders with thermosetting resin; filling a molding die placed in a press machine with the mixture; and applying compressing pressure ranging from 20 to 40 MPa to the molding die and simultaneously heating the molding die to a temperature raging from 150 degrees C to 250 degrees C that is the thermal cure initiate temperature of the resin (hot press), thereby pressing and curing the resin at the same time (see, for example, Patent Literature 2).

The thermosetting resin mentioned in above has a softening and melting points as physical properties thereof and the resin begins to be soften and molten upon heating and, then, cured thereafter. The temperature where the thermosetting resin starts to thermally cure can be evaluated by measuring the thermal cure initiate temperature of the resin with the use of, for example, a differential scanning calorimeter (DSC).

### Disclosure of the Invention

However, there are the following problems in the above mentioned processes.

Firstly, in the former process having the cold press step, the density of the resin could be significantly reduced by expanding thereof since the thermosetting resin is cured without applying any pressure after the compression molding thereof. The other functions such as the volume resistivity and the bending strength of the resin could also be decreased.

On the other hand, in the latter process having the hot pressing step, there is a problem of the reduction of the process rate even though a thermosetting resin having a rapid curing time is used because the temperature of 160 degrees C and the period for around 5 to 10 minutes are required to provide transferred heat to cure the material powders since there is a need to cure the resin completely during the pressing thereof.

Under the present circumstances, the present inventor has concentrated to study on the method for manufacturing a fuel cell bipolar plate, which can provide the bipolar plate having the physical properties required for the bipolar plate without decreasing the process rate, and found that the process can be remarkably improved by including the step of compression molding at a temperature that is the thermal cure initiate temperature of a thermosetting resin and the step of curing the resin after the compression molding step while the resin is not completely cured. In other word, in order to solve the above mentioned problems, the method for manufacturing a bipolar plate for a fuel cell and a bipolar plate for the fuel cell of the present invention comprises the following technical means taken.

A first aspect of the present invention provides a method for manufacturing a fuel cell bipolar plate, wherein the process comprises:
a compression molding step including the steps of filling the cavity of a molding die with a mixture of carbon powders and a thermosetting resin as a raw material powders and compression molding a mold plate having a configuration of a bipolar plate with a required pressure while heating said thermosetting resin at a required temperature that is the thermal cure initiate temperature of said thermosetting resin or above; and
a heating and curing step including the step of heating and curing said mold plate that is prepared in compression molding in said compression molding step at a required temperature that is the thermal cure initiate temperature of said thermosetting resin or above without applying any pressure thereto.

A second aspect of the present invention provides a method for manufacturing a fuel cell bipolar plate, wherein said compression molding of said mold plate is achieved and the curing step of said thermosetting resin is terminated such that said resin being semi-cured in said compression molding step.

A third aspect of the present invention provides a method for manufacturing a fuel cell bipolar plate, wherein said curing step is performed such that said semi-cured thermosetting resin in said compression molding step is fully cured in said heating and curing step.

Here, the state represented by "fully cured" is defined as that the mass change of the resulting plate is within ± 0.5 % even though further heating is applied to said molded fuel cell bipolar plate, and the state represented by "semi-cured" is defined as that the mass of said semi-cured resin after further heating thereof is different from the mass of the resulting fully cured fuel cell bipolar plate by 0.05 % to 0.5 %. Further, though it is not specifically mentioned herein, the state of "non-cured" is defined as that the mass of said semi-cured resin after further heating thereof is different from the mass of the resulting fully cured fuel cell bipolar plate by over 0.5 %.

A fourth aspect of the present invention provides a method for manufacturing a fuel cell bipolar plate, wherein the compression molding condition in said compression molding step is determined such that the mass change of said mold plate between before and after said heating and curing step is within 0.05 to 0.5 %.

A fifth aspect of the present invention provides a method for manufacturing a fuel cell bipolar plate, wherein said raw material powders comprise 80 % to 90 % of carbon powders and 10 to 20 % of thermosetting resin in mass ratio.

A sixth aspect of the present invention provides a method for manufacturing a fuel cell bipolar plate, wherein said required temperature in said compression molding step is in the range from 80 degrees C to 200 degrees C.

A seventh aspect of the present invention provides a method for manufacturing a fuel cell bipolar plate, wherein said required pressure in said compression molding step is in the range from 100 MPa to 300 MPa.

An eighth aspect of the present invention provides a method for manufacturing a fuel cell bipolar plate, wherein said required temperature in said heating and curing step is in the range from 150 degrees C to 200 degrees C.

A ninth aspect of the present invention provides a method for manufacturing a fuel cell bipolar plate, wherein said mass change of said mold plate between before and after said heating and curing step is in the range from 0.05 % to 0.5 %.

A tenth aspect of the present invention provides a method for manufacturing a fuel cell bipolar plate, wherein said thermosetting resin is phenolic resin.

A eleventh aspect of the present invention provides a method for manufacturing a fuel cell bipolar plate, wherein said mold plate after said compression molding step contains 0.008 % by mass to 0.08 % by mass of free phenolic resin.

A twelfth aspect of the present invention provides the fuel cell bipolar plate produced by any one of process as set forth in the first to eleventh aspects in above and the density thereof after said heating and curing step is 1.95 g/cm³ or above.

### BRIEF DESCRIPTION OF THE DRAWINGS

[Fig. 1] Figs. 1 are (a) a front view and (b) a rear view illustrating one embodiment of the fuel cell bipolar plate according to the present invention.
[Fig. 2] Figs. 2 are (a) a cross sectional view taken along the line II-II in Figs. 1 and (b) an enlarged view of part A.
[Fig. 3] Fig. 3 is a schematic view illustrating one embodiment of the press machine in which the molding die is placed that is employed in the method for manufacturing the fuel cell bipolar plate according to the present invention.
[Fig. 4] Fig. 4 is a schematic view illustrating one embodiment of the heating apparatus employed in the method for manufacturing the fuel cell bipolar plate according to the present invention.

### BEST MODE FOR CARRYING OUT THE INVENTION

Embodiments of the present invention will be explained with reference to the drawings.

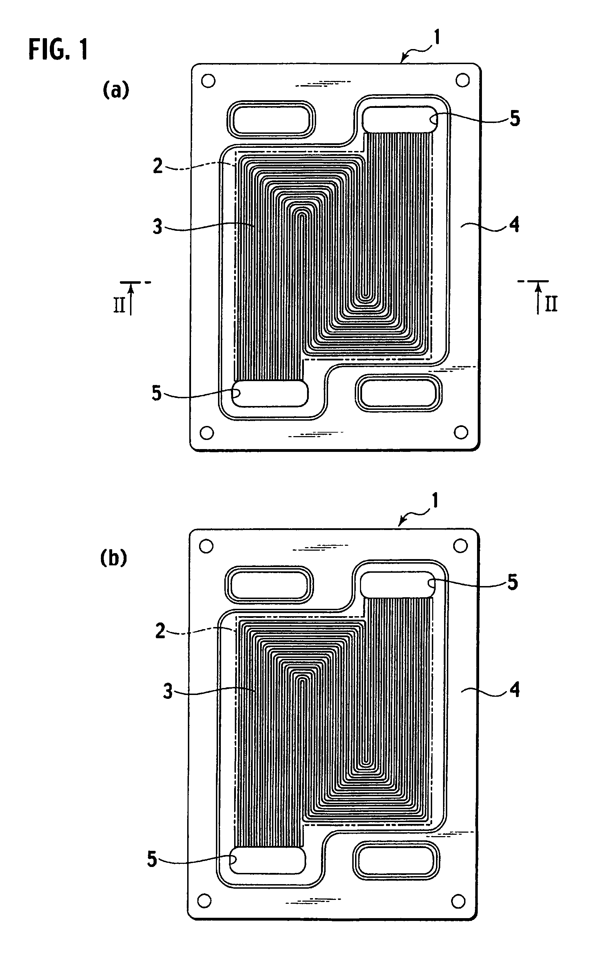

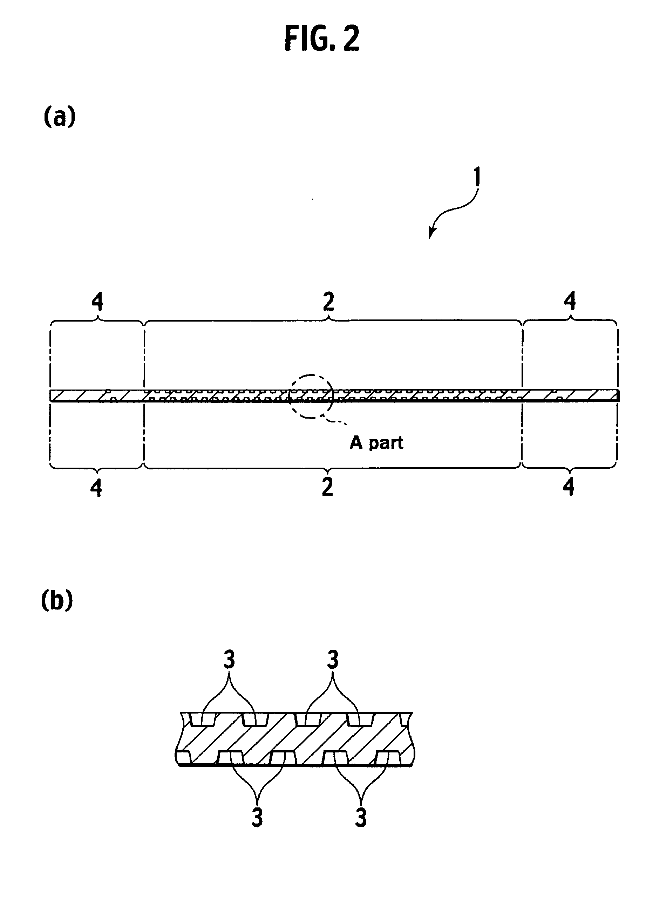

Figs. 1 are (a) a front view and (b) a rear view illustrating one embodiment of the fuel cell bipolar plate according to the present invention; and Figs. 2 are (a) a cross sectional view taken along the line II-II in Figs. 1 and (b) an enlarged view of part A.

This fuel cell bipolar plate 1 that is bipolar plate (separator) to be applied to a Polymer Electrolyte Fuel Cell (PEFC) system includes a flow passage groove part 2 and a surrounding part 4 that surrounds the flow passage groove part 2 provided on both surfaces thereof (at least one surface). In the flow passage groove part 2, a groove (flow passage groove) 3, which serves as a flow passage for a fuel gas, an oxidizing gas, or a cooling water, is formed. The flow passage groove 3 is formed in a fine arrangement in a prescribed area surrounded by the surrounding part 4 on the surface of the bipolar plate 1, forming the flow passage groove part 2.

The flow passage groove 3 is communicated with a manifold 5, which is formed in the surrounding part 4 on the surface of the bipolar plate 1, through which the fuel gas, the oxidizing gas, or the cooling water can be conducted into or discharged from the flow passage groove 3. In Figs. 1, only two series of the flow passage groove 3 and the manifold 5 are shown and another series thereof, that is, the third flow passage groove and the third manifold are abbreviated to show.

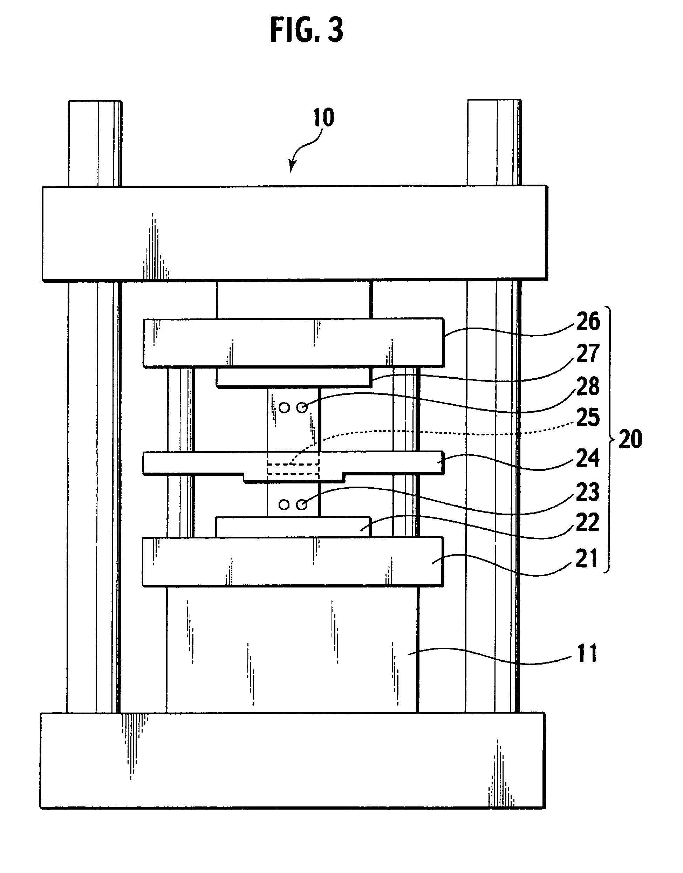

Fig. 3 is a schematic view illustrating one embodiment of the press machine in which the molding die is placed that is employed in the method for manufacturing the fuel cell bipolar plate according to the present invention.

As shown in Fig. 3, this press machine 10 includes a hydraulic cylinder 11 that positions and sets the molding die 20 to the predetermined position. The hydraulic cylinder 11 is for applying the predetermined pressure to mold the raw material powders that are comprised of the mixture of carbon powders and thermosetting resin and filled into a cavity 25 as described in below, through the molding die 20 (compression molding).

The molding die 20 includes a lower punch (lower die) 22 provided on a lower side block 21, an upper punch (upper die) 27 provided on an upper side block 26, and a die (frame body) 24, which is a die that carries the periphery of a cavity 25 formed between the upper and the lower dies 22 and 27.

Also, in the molding die 20, the lower punch (lower die) 22 and the upper punch (upper die) 27 include heaters 23 and 28, respectively. The heaters 23 and 28 provide heat to the thermosetting resin contained in the raw material filled into the cavity 25 to the predetermined temperature that is the thermal cure initiate temperature of the thermosetting resin of above during the compression molding thereof.

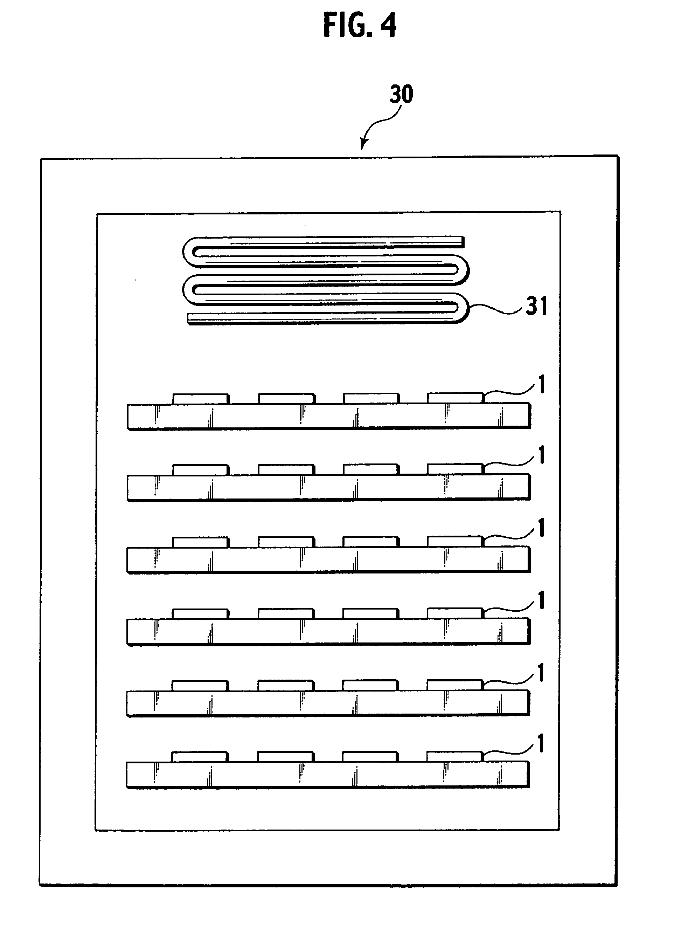

Fig. 4 is a schematic view illustrating one embodiment of the heating apparatus employed in the method for manufacturing the fuel cell bipolar plate according to the present invention.

As shown in Fig. 4, this heating apparatus (curing furnace) 30 has an inner volume that is capable of accommodating multiple bipolar plates 1 in multi-stage and includes a heater (such as an electric heater) 31 provided to the upper part thereof. The heater 31 (heating apparatus 30) provides heat the mold plate (semi-produced bipolar plate 1), which has been filled into the cavity 25 of the molding die 20, subjected to compression molding by the press machine 10, taken out of the molding die 20 and, then, accommodated in the heating apparatus (curing furnace) 30, to the predetermined temperature that is the thermal cure initiate temperature of the thermosetting resin or above.

The method for manufacturing a fuel cell bipolar plate of the present invention provides a fuel cell bipolar plate using the mixture of carbon powders and a thermosetting resin as a raw material powders.

In other word, the inventive method for manufacturing a fuel cell bipolar plate comprises a step (1): firstly, with the use of the press machine 10 and the molding die 20, the cavity 25 of the molding die 20 is filled with said raw material powders followed by compression molding the raw material powders with the predetermined pressure by the hydraulic cylinder 11 to provide the mold plate having the shape of a bipolar plate while the material powders are heated to the predetermined temperature that is the thermal cure initiate temperature of the thermosetting resin by the heaters 23 and 28 (compression molding step).

By this compression molding step, the compression molding of the mold plate can be achieved as well as the mold plate in which the thermosetting resin is semi-cured can be obtained (semi-produced bipolar plate 1). That is to say, the mold plate (semi-produced bipolar plate 1) obtained here is formed into a plate like while the thermosetting resin contained in the raw material powders are in the state of semi-cured.

For the indication of the completion of the compression molding step, it is preferable that the condition for compression molding step is determined such that the mass change of said mold plate between before and after the heating and curing step (that is, between the end of the compression molding step and the end of the heating and curing step) is laid in the range from 0.05 to 0.5 % and terminate the compression molding step.

Secondary, (2) the mold plate (semi-produced bipolar plate 1) that is molded in said compression molding step is heated and cured at the predetermined temperature that is the thermal cure initiate temperature of said thermosetting resin or above without applying any pressure by using the heating apparatus (curing furnace) 30.

In the above method for manufacturing the fuel cell bipolar plate, the carbon powders and the thermosetting resin are mixed in the predetermined mass ratio to prepare the raw material powders. It is preferable that the mass ratio of the mixture of the raw material powders contains 90 % to 80 % of the carbon powders and 10 % to 20 % of the thermosetting resin. Also, to the raw material powders, a fiber matrix, a filler, a release agent, a hydrolysis resistant agent, and the like may be added.

For the thermosetting resin, phenolic resins represented by a resol type phenol resin or a novolac phenol resin are preferably used because of its excellent moldability. Furthermore, it is preferred to use the material in which the carbon powders are coated with the thermosetting resin since it provides higher strength.

In the compression molding step, the press machine 10 as shown in Fig. 3 is used, wherein the raw material powders are homogeneously spread out within (filled into) the cavity 25 of the molding die 20 to which a pressure in the range form 100 MPa to 300 MPa is applied by the hydraulic cylinder 11 while heating thereof to the predetermined temperature that is the thermal cure initiate temperature of the thermosetting resin to provide the mold plate in a bipolar plate by compression molding.

According to this hot compression step, the thermosetting resin can be cured so that the mass change of the mold plate between before and after the curing step is in the range from 0.05 % to 0.5 % without dropping the molding rate.

Consequently, the expansion rate at the curing of the resin can be reduced, thereby preventing the functional reductions of the resin such as volume resistivity, bending strength and gas permeability.

Furthermore, upon applying the pressure ranging from 100 MPa to 300 MPa to the raw material powders at the compression molding thereof by the press machine 10, the mold plate in the shape of a bipolar plate having a high density can be provided, thereby producing the fuel cell bipolar plate 1 having both mass production ability and high performance.

In the hot compression step of the present process, the thermosetting resin is not fully cured which is different from that in the conventional compression step, therefore, it is advantageous in the releasing performance thereof because of no adhesion between the die and the product occurred.

In the heating and curing step of the present invention, the mold plate of semi-cured (semi-produced bipolar plate 1) that is taken out of the molding die 20 is transferred into the heating apparatus (curing furnace) 30 as shown in Fig. 4 and subjected to the heating to a temperature that is the thermal cure initiate temperature of the thermosetting resin, that is, in the range from 150 degrees c to 200 degrees C by the heaters (electric heaters and the like) 31 without applying any pressure to fully cure the thermosetting resin, thereby providing the fuel cell bipolar plate 1.

At that time, the mass change of the mold plate between before and after the heating and curing step is at the level around 0.05 % to 0.5 %, thereby preventing the resulting resin from being functionally reducing due to its curing expansion.

Also, the content of the free phenol in the mold plate after the compression molding step then is in the range from 0.008 % by mass to 0.08 % by mass.

Yet, further, the fuel cell bipolar plate 1 after being subjected to the heating and curing step has the density of 1.95 g/cm³ or above.

The heating and curing step may be conducted such that a plenty of mold plates are introduced to a batch type furnace and heated, or the mold plates on a conveyer belt are heated by a continuous furnace. In either ways, a plenty numbers of mold plates can be processed and the total process time can be reduced even though it takes a long time to heat them.

As described in above, according to the embodiment of the present invention in which the hot compression molding step for the raw material powders comprising the carbon powders and the thermosetting resin by the press machine 10 and the heating and curing step for the thermosetting resin by the heating apparatus 30 are used in combination, the fuel cell bipolar plate in which the functional reduction due to the expansion at the curing of the resin can be produced without dropping the production rate.

The present invention will be explained in more detail by showing several examples and comparative examples but the present invention is not intended to limited to those examples.

Firstly, the composition of the material for the fuel cell bipolar plate commonly used in every examples and comparative examples is disclosed and the material comprises 100 parts by mass of spherical graphite powders having the average particle size of approximately 5 to 50 µ m which are coated with 20 parts by mass of a phenolic resin by solution method was used. The thermal cure initiate temperature of this phenolic resin is approximately 80 degrees C.

For every examples and comparative examples, masses, densities, volume resistivities, bending strengths and gas permeabilities thereof were measured for the comparisons, and measuring methods for the density, the volume resistivity, the bending strengths, and the gas permeability were as follows.

Density: a mold sample having the diameter of 50 mm and the thickness of 3 mm was prepared and the density thereof was calculated according to Archimedean principle by using an electronic balance scale (manufactured by Shimadzu Science East Co.).

Volume resistivity: a mold sample having the diameter of 50 mm and the thickness of 3 mm was prepared and the volume resistivity thereof was measured according to four-terminal method by using a resistance rate measure, Loresta GP manufactured by Dia Instruments Co., Ltd.

Bending strength: according to JIS_K7171, a mold sample having the length of 50 mm, the width of 25 mm and the thickness of 3 mm was used to measure the bending strength by three-point bending with 40 mm span.

Gas permeability: a mold sample having the diameter of 50 mm and the thickness of 1 mm was prepared and its gas permeability was measured according to differential pressure method by using a gas transmission rate tester manufactured by Toyo Seiki Seisaku-Sho, Ltd.

Generally, the required performances for a fuel cell bipolar plate are considered to be 12 mΩ · cm or less of volume resistivity and 50 MPa or more of bending strength.

### Example 1

The raw material powders were prepared by sufficiently mixing the carbon powders of 87 % and resin of 13 %. The resulting mixture was evenly placed (filled) into the cavity (25) having the volume of the diameter of 50 mm and the depth of 9 mm of the molding die (20). Then, the temperature of the molding die was set to a temperature ranging from 170 to 175 degrees C and the pressure of 125 MPa was applied to the molding die at the pressure rate of 1,500 kN/min. by the press machine (10) to press and solidify the raw material powders to provide a mold sample. The pressed and solidified mold sample was taken out of the molding die and the mass, the density and the volume resistivity of the sample were measured and they were 10.58 g, 2.022 g/cm³ and 10.81 mΩ · cm, respectively.

Next, the mold sample taken out of the molding die was transferred into the heating apparatus (30) for heating the sample at 160 degrees C for one hour to cure the resin. The mold sample was taken out of the heating apparatus was observed and no abnormality such as bow, deformation and blister was not found. Also, the mass, the density, the volume resistivity, the bending strength and the gas permeability were measured and they were 10.55 g, 2.011 g/cm³, 10.80 mΩ · m, 58.77 MPa and 8.2 × 10⁻¹⁷ mol ·m/m2 · s · Pa, respectively, which were all suitable values for a fuel cell bipolar plate.

### Example 2

The raw material powders were prepared by sufficiently mixing the carbon powders of 89 % and resin of 11 %. The resulting mixture was evenly placed (filled) into the cavity (25) having the volume of the diameter of 50 mm and the depth of 9 mm of the molding die (20). Then, the temperature of the molding die was set to a temperature ranging from 170 to 175 degrees C and the pressure of 150 MPa was applied to the molding die at the pressure rate of 1,500 kN/min. by the press machine (10) to press and solidify the raw material powders to provide a mold sample. The pressed and solidified mold sample was taken out of the molding die and the mass, the density and the volume resistivity of the sample were measured and they were 10.32 g, 2.014 g/cm³ and 10.59 mΩ · cm, respectively.

Next, the mold sample taken out of the molding die was transferred into the heating apparatus (30) for heating the sample at 160 degrees C for one hour to cure the resin. The mold sample was taken out of the heating apparatus was observed and no abnormality such as bow, deformation and blister was not found. Also, the mass, the density, the volume resistivity, the bending strength and the gas permeability were measured and they were 10.29 g, 2.004 g/cm³, 10.56 mΩ · m, 52.33 MPa and 1.2 × 10⁻¹⁶ mol · m/m2 · s · Pa, respectively, which were all suitable values for a fuel cell bipolar plate.

### Example 3

The raw material powders were prepared by sufficiently mixing the carbon powders of 85 % and resin of 15 %. The resulting mixture was evenly placed (filled) into the cavity (25) having the volume of the diameter of 50 mm and the depth of 9 mm of the molding die (20). Then, the temperature of the molding die was set to a temperature ranging from 170 to 175 degrees C and the pressure of 125 MPa was applied to the molding die at the pressure rate of 1,500 kN/min. by the press machine (10) to press and solidify the raw material powders to provide a mold sample. The pressed and solidified mold sample was taken out of the molding die and the mass, the density and the volume resistivity of the sample were measured and they were 9.03 g, 1.999 g/cm³ and 10.77 mΩ · cm, respectively.

Next, the mold sample taken out of the molding die was transferred into the heating apparatus (30) for heating the sample at 160 degrees C for one hour to cure the resin. The mold sample was taken out of the heating apparatus to observe and no abnormality such as bow, deformation and blister was not found. Also, the mass, the density, the volume resistivity, the bending strength and the gas permeability were measured and they were 9. 00 g, 1.983 g/cm³, 11.18 mΩ · m, 63.57 MPa and 6.2 × 10⁻¹⁷ mol · m/m² · s · Pa, respectively, which were all suitable for a fuel cell bipolar plate.

### Comparative Example 1

The raw material powders were prepared by sufficiently mixing the carbon powders of 89 % and resin of 11 %. The resulting mixture was evenly placed (filled) into the cavity (25) having the volume of the diameter of 50 mm and the depth of 9 mm of the molding die (20). Then, the temperature of the molding die was set to the temperature of 75 degrees C and the pressure of 125 MPa was applied to the molding die at the pressure rate of 1,500 kN/min. by the press machine (10) to press and solidify the raw material powders to provide a mold sample. The pressed and solidified mold sample was taken out of the molding die and the mass, the density and the volume resistivity of the sample were measured and they were 10.85 g, 1.978 g/cm³ and 12.22 mΩ · cm, respectively.

Next, the mold sample taken out of the molding die was transferred into the heating apparatus (30) for heating the sample at 160 degrees C for one hour to cure the resin. The mold sample was taken out of the heating apparatus to observe and bubbles were found. Also, the mass, the density, the volume resistivity, the bending strength and the gas permeability were measured and measured values were 10.77 g, 1.943 g/cm³, 14.78 mΩ · m, 32.39 MPa and 6.2 × 10⁻¹⁴ mol · m/m² · s · Pa, respectively. Any of those values were so deteriorated that it was found that this mold sample was inadequately used as a fuel cell bipolar plate.

### Comparative Example 2

The raw material powders were prepared by sufficiently mixing the carbon powders of 89 % and resin of 11 %. The resulting mixture was evenly placed (filled) into the cavity (25) having the volume of the diameter of 50 mm and the depth of 9 mm of the molding die (20). Then, the temperature of the molding die was set to a normal temperature (25 degrees C) and the pressure of 125 MPa was applied to the molding die at the pressure rate of 1,500 kN/min. by the press machine (10) to press and solidify the raw material powders to provide a mold sample. The pressed and solidified mold sample was taken out of the molding die and the mass, the density and the volume resistivity of the sample were measured and they were 11.12 g, 1.979 g/cm³ and 13.05 mΩ · cm, respectively.

Next, the mold sample taken out of the molding die was transferred into the heating apparatus (30) for heating the sample at 160 degrees C for one hour to cure the resin. The mold sample was taken out of the heating apparatus to observe and bubbles were found. Also, though the mass, the density, the volume resistivity, the bending strength and the gas permeability were measured, the gas permeability could not measured due to the inferior density and measured values were measured and they were 11.03 g of the mass, 1.938 g/cm³ of the density, 17.69 mΩ · m of the volume resistivity and 17.50 MPa of the bending strength. Among them, both volume resistivity and the bending strength were so deteriorated that it was found that this mold sample was inadequately used as a fuel cell bipolar plate.

### Verification of Curing Rate

The raw material powders were prepared by sufficiently mixing the graphite powders of 87 % and phenolic resin of 13 % (Sample A). Then, the temperature of the molding die was set to a temperature ranging from 170 to 175 degrees C and the pressure of 125 MPa was applied to the molding die at the pressure rate of 1,500 kN/min. by the press machine (10) to press and solidify the raw material powders to provide a mold sample (Sample B). Next, the mold sample taken out of the molding die was transferred into the heating apparatus (30) for heating the sample at 160 degrees C for one hour to cure the resin (Sample C). For the obtained Samples A to C in this way, mass changes and residual mass of unreacted phenol (free phenol) were measured. The measurement methods were according to JIS_K7240 "plastic-phenol-formaldehide moldings-determination of free phenol-iodometric method". The results are shown in Table 1.

**Table 1**

| Sample | Weight change rate (%) | Rate of free phenol (wt %) |
|---|---|---|
| A | 0 | 0.086 |
| B | - 0.92 | 0.015 |
| C | - 1.07 | 0.006 |

As shown in Table 1, it can be found that Sample B was different from Sample C in the mass by 0.15 % of the reduction, as well as, the rate of free phenol was reduced by 0.009 % by mass.

According to the mentioned above, in Examples 1 to 3 in which the temperature in the compression molding step was the thermal cure initial temperature of the thermosetting resin, the fuel cell bipolar plate 1 having satisfied physical properties such as appearance, volume resistivity, bending strength and gas permeability as functions therefor could be produced. On the contrary, in Comparative Examples 1 and 2 in which the temperature of the compression molding step was lower than the thermal cure initial temperature of the thermosetting resin, all samples were deteriorated in appearance, volume resistivity and bending strength and no fuel cell bipolar plate 1 having satisfied physical properties could be produced.

### Industrial Applicability

In accordance with the present invention, the mass changes of the resin between before and after the compression molding step for the thermosetting resin can be decreased since the raw material powders are subjected to the compression mold while heating them at a temperature that is the thermal cure initial temperature or above of the thermosetting resin, thereby preventing the resulting plate from being functionally reduced in volume resistivity, bending strength and gas permeability due to the expansion thereof at the curing.

## Claims

1. A method for manufacturing a fuel cell bipolar plate, wherein the process comprises:
a compression molding step including the steps of filling the cavity of a molding die with a mixture of carbon powders and a thermosetting resin as a raw material powders and compression molding a plate having a configuration of a bipolar plate with a required applying pressure while heating said thermosetting resin at a required temperature that is the thermal cure initiate temperature of said thermosetting resin or above; and
a heating and curing step including the step of heating and curing said mold plate that is prepared by compression molding in said compression molding step at a required temperature that is the thermal cure initiate temperature of said thermosetting resin or above without applying any pressure thereto.

2. The method for manufacturing a fuel cell bipolar plate according to Claim 1, wherein the compression molding of said mold plate is achieved and the curing step of said thermosetting resin is terminated such that said resin being semi-cured in said compression molding step.

3. The method for manufacturing a fuel cell bipolar plate according to any one of Claims 1 and 2, wherein said curing step is performed such that said semi-cured thermosetting resin in said compression molding step is fully cured in said heating and curing step.

4. The method for manufacturing a fuel cell bipolar plate according to any one of Claims 1 to 3, wherein the compression molding condition in said compression molding step is determined such that the mass change of said mold plate between before and after said heating and curing step is within 0.05 to 0.5 %.

5. The method for manufacturing a fuel cell bipolar plate according to any one of Claims 1 to 4, wherein said raw material powders comprise 80 to 90 % of carbon powders and 10 to 20 % of thermosetting resin in mass ratio.

6. The method for manufacturing a fuel cell bipolar plate according to any one of Claims 1 to 5, wherein said required temperature in said compression molding step is in the range from 80 degrees C to 200 degrees C.

7. The method for manufacturing a fuel cell bipolar plate according to any one of Claims 1 to 6, wherein said required pressure in said compression molding step is in the range from 100 MPa to 300 MPa.

8. The method for manufacturing a fuel cell bipolar plate according to any one of Claims 1 to 7, wherein said required temperature in said heating and curing step is in the range from 150 degrees C to 200 degrees C.

9. The method for manufacturing a fuel cell bipolar plate according to any one of Claims 1 to 8, wherein said mass change of said mold plate between before and after said heating and curing step is in the range from 0.05 to 0.5 %.

10. The method for manufacturing a fuel cell bipolar plate according to any one of Claims 1 to 9, wherein said thermosetting resin is phenolic resin.

11. The method for manufacturing a fuel cell bipolar plate according to any one of Claims 1 to 10, wherein said mold plate after said compression molding step contains 0.008 % by mass to 0.08 % by mass of free phenolic resin.

12. A fuel cell bipolar plate produced by any one of processes as set forth in Claims 1 to 11, wherein the density of said plate after said heating and curing step is 1.95 g/cm³ or above.
